# EUROPÄISCHE PATENTANMELDUNG

(11) **EP 2 442 438 A2**
(43) Veröffentlichungstag der Anmeldung: **18.04.2012**
(21) Anmeldenummer: 11183903.1
(22) Anmeldetag: 05.10.2011
(51) Int. Cl.: H02P 6/20, H02P 6/22

(54) **Pumpeneinrichtung für ein Hausgerät, Hausgerät und Verfahren zum Betreiben eines Antriebsmotors**

(30) Priorität: 15.10.2010 DE 102010042491
(71) Anmelder: BSH Bosch und Siemens Hausgeräte GmbH, 81739 München (DE)
(72) Erfinder: Albayrak, Hasan Gökcer, 13469 Berlin (DE); Böttger, Torsten, 01445 Radebeul (DE); Seidl, Rudolf, 93057 Regensburg (DE); Skrippek, Jörg, 14641 Wustermark (DE)

(57) **Zusammenfassung**

Die Funktionalität einer Pumpeneinrichtung für ein Hausgerät soll erfindungsgemäß erhöht werden. Es wird demnach eine Pumpeneinrichtung 14 bereitgestellt, welche einen Antriebsmotor 1 sowie eine Schaltungsanordnung 15 zum Betreiben des Antriebsmotors 1 aufweist. Der Antriebsmotor 1 ist ein permanenterregter Synchronmotor. Die Schaltungsanordnung 15 kann die Drehzahl und/oder die Drehrichtung des Antriebsmotors 1 steuern. Bevorzugt erfolgt die Inbetriebnahme des Antriebsmotors 1 in einem Schrittmotorbetrieb, wodurch das Anlaufen des Antriebsmotors 1 in die gewünschte Richtung vereinfacht wird.

## Beschreibung

Die Erfindung betrifft eine Pumpeneinrichtung für ein Hausgerät. Die Pumpeneinrichtung umfasst einen Antriebsmotor zum Antreiben eines Pumpenrades, wobei der Rotor des Antriebsmotors Permanentmagnete und der Stator des Antriebsmotors zumindest drei Phasenstränge aufweist. Die Pumpeneinrichtung umfasst außerdem eine Schaltungsanordnung zum Betreiben des Antriebsmotors. Die Erfindung betrifft auch ein Hausgerät mit einer solchen Pumpeneinrichtung. Die Erfindung bezieht sich ferner auf ein Verfahren zum Betreiben eines Antriebsmotors, durch welchen ein Pumpenrad eines Hausgeräts angetrieben wird.

Pumpeneinrichtungen für Hausgeräte sind bereits aus dem Stand der Technik bekannt, nämlich beispielsweise aus der Druckschrift DE 103 42 050 A1. Die aus diesem Dokument bekannte Pumpeneinrichtung umfasst ein Gehäuse, welches eine einteilige Pumpenkammer bildet. Diese Pumpenkammer nimmt in ihrem Inneren einen Rotor eines Antriebsmotors sowie ein Pumpenrad auf. Der Rotor trägt Permanentmagnete, die mit einem Mantel aus Kunststoffmaterial fluiddicht umformt sind. Außerhalb des Gehäuses befindet sich der Stator des Antriebsmotors. Dieser Stator umfasst neun Wicklungen, die auf eine solche Art und Weise miteinander beschaltet sind, dass insgesamt drei Phasenstränge gebildet sind. Die Phasenstränge werden durch einen Wechselrichter bestromt.

Pumpeneinrichtungen für Hausgeräte sind außerdem aus den Druckschriften DE 103 52 487 A1 sowie DE 10 2005 036 818 A1 bekannt.

Es ist Aufgabe der Erfindung, eine Lösung aufzuzeigen, wie die Funktionalität einer Pumpeneinrichtung in einem wasserführenden Hausgerät im Vergleich zum Stand der Technik erweitert werden kann.

Diese Aufgabe wird erfindungsgemäß durch eine Pumpeneinrichtung, durch ein Hausgerät sowie durch ein Verfahren mit den Merkmalen gemäß jeweiligem unabhängigem Patentanspruch gelöst. Vorteilhafte Ausführungen der Erfindung sind Gegenstand der abhängigen Patentansprüche sowie nachfolgender Beschreibung.

Eine erfindungsgemäße Pumpeneinrichtung für ein Hausgerät umfasst einen Antriebsmotor zum Antreiben eines Pumpenrads, wobei der Rotor des Antriebsmotors Permanentmagnete aufweist. Die Pumpeneinrichtung umfasst eine Schaltungsanordnung zum Betreiben des Antriebsmotors. Der Stator des Antriebsmotors weist zumindest drei Phasenstränge auf, und die Schaltungsanordnung umfasst zu jedem Phasenstrang ein elektrisches Steuerelement zum Steuern eines Stromflusses durch den zugeordneten Phasenstrang. Die Schaltungsanordnung ist dazu ausgebildet, durch Ansteuern der Steuerelemente die Drehzahl und/oder die Drehrichtung des Antriebsmotors zu steuern.

Also wird der erfindungsgemäße Effekt dadurch erzielt, dass die Drehzahl und/oder die Drehrichtung des Antriebsmotors durch die Schaltungsanordnung gesteuert werden können. Erstmals erfolgt die Steuerung der Drehzahl und/oder der Drehrichtung eines Pumpenrads in einem Hausgerät. Auf diesem Wege gelingt es, die Funktionalität der Pumpeneinrichtung im Vergleich zum Stand der Technik - zum Beispiel im Vergleich zu der Pumpeneinrichtung gemäß Druckschrift DE 103 42 050 A1 - zu erweitern. Es kann nämlich bedarfsgerecht eine solche Drehzahl des Pumpenrads eingestellt werden, bei welcher die Geräuschentwicklung auf ein Minimum reduziert wird oder die Pumpenleistung, das heißt die Menge des geförderten Wassers pro Zeiteinheit, auf einen vorbestimmten Wert eingestellt wird. Zum Beispiel kann die Wasserfördermenge an ein Abwassersystem angepasst werden. Die Änderung der Drehrichtung des Pumpenrades ermöglicht zum Beispiel, dass sich selbiges Pumpenrad von Fremdkörpern bzw. Flusen befreien und somit ordnungsgemäß arbeiten kann. Hierdurch erübrigt sich eine häufige Wartung der Pumpeneinrichtung mit dem damit verbundenen Zeit- und Kostenaufwand.

Bei dem Antriebsmotor handelt es sich aufgrund seiner Ausgestaltung mit Permanentmagneten und wenigstens drei Phasensträngen um einen permanenterregten Synchronmotor (auch unter der Bezeichnung "bürstenlose Gleichstrommaschine" bekannt). Bei einem solchen Antriebsmotor lässt sich die Drehzahl ohne viel Aufwand durch entsprechende Ansteuerung der Steuerelemente variieren, nämlich durch die Änderung der Frequenz der an die Phasenstränge angelegten elektrischen Spannungen. Durch Bereitstellen z.B. eines Frequenzumrichters - also eines durch eine Steuereinheit ansteuerbaren Wechselrichters - kann die Frequenz der Spannung und hierdurch die Drehzahl des Pumpenrads gesteuert werden. Auch die Drehrichtung des Pumpenrads lässt sich durch entsprechende Ansteuerung eines solchen Frequenzumrichters steuern. Da der Frequenzumrichter elektrische Spannung mit einer beliebigen Amplitude und einer beliebigen Frequenz bereitstellen kann, kann die Pumpeneinrichtung mit beliebigen Netzspannungen, sei es mit einer Netzspannung von 220 V mit einer Frequenz von 50 Hz oder auch einer Netzspannung von 120 V mit einer Frequenz von 60 Hz, betrieben werden. Unabhängig von der Amplitude und der Frequenz der Netzspannung lassen sich die gewünschte Drehzahl sowie die Drehrichtung des Antriebsmotors einstellen. Die Pumpeneinrichtung kann also bei unterschiedlichen Netzvarianten eingesetzt werden, ohne dass sie umgebaut und an eine konkrete Netzvariante angepasst werden muss.

Ein weiterer Vorteil der Pumpeneinrichtung besteht darin, dass eine bereits vorhandene Pumpe - zum Beispiel die aus der Druckschrift DE 103 42 050 A1 - keiner wesentlichen Änderung bedarf, um mit unterschiedlichen Drehzahlen und/oder in unterschiedlichen Drehrichtungen betrieben zu werden. Es kann zum Beispiel nur der Stator, nämlich insbesondere dessen Wicklungen, und die Schaltungsanordnung umgestaltet werden, um die Steuerung der Drehzahl und/oder der Drehrichtung zu gewährleisten.

Unter dem Begriff Hausgerät wird hier insbesondere ein wasserführendes Hausgerät verstanden. Das Hausgerät kann eine Waschmaschine, ein Wäschetrockner, ein Waschtrockner oder auch eine Geschirrspülmaschine sein.

Es hat sich als besonders vorteilhaft herausgestellt, wenn der Stator eine gerade Anzahl von Phasensträngen aufweist. Besonders bevorzugt weist der Stator vier Wicklungen und auch vier Phasenstränge auf. Dann kann der Antriebsmotor ohne viel Aufwand, zum Beispiel in einem unipolaren Schrittmotorbetrieb in die vorgewählte Richtung in Bewegung gebracht werden. Durch die Verwendung von vier Phasensträngen wird auch ein Abschalten von zwei Phasensträngen in einem Synchronbetrieb des Antriebsmotors ermöglicht, und die Phasenstränge können paarweise abgekühlt werden.

Die Schaltungsanordnung kann jeweils einen pulsartigen Verlauf des Stromes in den Phasensträngen erzeugen und hierdurch eine schrittweise Bewegung des Rotors bewirken. Dann wird der Antriebsmotor gemäß dem Schrittmotorbetrieb angesteuert. In einem solchen Schrittmotorbetrieb ist die Winkelstellung des Rotors stets bekannt, und der Rotor kann ohne viel Aufwand in eine vorgegebene Richtung in Betrieb genommen werden. Der Schrittmotorbetrieb ist bevorzugt ein unipolarer Schrittmotorbetrieb.

Die schrittweise Bewegung des Rotors erfolgt bevorzugt bis zu einer vorbestimmten Drehzahl, und bei Erreichen dieser Drehzahl wird der Antriebsmotor in einen Synchronbetrieb überführt. Im Synchronbetrieb verändert sich die Lage des Rotors gleichmäßig, und der Rotor bewegt sich synchron zu dem von dem Stator erzeugten Drehfeld. Der Übergang von dem Schrittmotorbetrieb in den Synchronbetrieb findet beispielsweise bei einer Drehzahl zwischen 100 und 150 Umdrehungen pro Minute statt.

In einer Ausführungsform ist vorgesehen, dass die Schaltungsanordnung wenigstens ein Steuerelement in dem Synchronbetrieb des Antriebsmotors abschaltet und nur vorbestimmte Steuerelemente ansteuert. Dann werden nur diejenigen Phasenstränge des Stators bestromt, die mit den angesteuerten Steuerelementen gekoppelt sind. Bei einem Stator mit vier Phasensträngen kann dies zum Beispiel so erfolgen, dass nur zwei Phasenstränge des Stators in dem Synchronbetrieb bestromt werden. Dies hat den Vorteil, dass bei Erreichen einer vorbestimmten kritischen Temperatur der bestromten Phasenstränge - zum Beispiel durch eine hohe Stromstärke - diese Phasenstränge von einer Betriebsspannung entkoppelt und die bisher nicht genutzten Phasenstränge bestromt werden können. Also kann das Bestromen der Phasenstränge des Antriebsmotors im Synchronbetrieb abwechselnd erfolgen. Die nicht bestromten Phasenstränge können somit gekühlt werden, und es kann insgesamt eine längere Betriebsdauer der Pumpeneinrichtung erzielt werden.

Die Schaltungsanordnung kann die über die Phasenstränge des Stators fließenden Ströme erfassen. Bevorzugt sind die Steuerelemente mit einem gemeinsamen Stromerfassungswiderstand gekoppelt. Dann kann die Schaltungsanordnung einen über den Stromerfassungswiderstand fließenden Strom erfassen. Aus dem Strom können Informationen über den jeweils augenblicklichen Betriebszustand des Antriebsmotors und auch der Pumpeneinrichtung gewonnen werden. Zum Beispiel können aus dem Strom Informationen über die Temperatur, wie auch über das Drehmoment des Antriebsmotors gewonnen werden. Die Drehzahl und/oder die Drehrichtung des Antriebsmotors kann dann abhängig von diesen Informationen gesteuert werden. Durch die Erfassung des Stromes kommt die Pumpeneinrichtung ohne einen zusätzlichen Thermoschutz (zum Beispiel einen so genannten I²t-Schutz) aus. Die Stromstärke des Stromes kann durch eine Steuereinheit ausgewertet werden, und bei Überschreiten einer vorbestimmten Stromstärke kann der Antriebsmotor abgeschaltet bzw. die Phasenstränge des Stators von einer Betriebsspannung entkoppelt werden. Somit werden auch die Steuerelemente, seien es Transistoren oder andere elektrische Schalter, vor thermischen Überlastungen geschützt.

In einer Ausführungsform können Steueranschlüsse der Steuerelemente jeweils mit einem Ausgang eines Komparators gekoppelt sein. An einen ersten Eingang des Komparators kann eine Gleichspannung mit einem Schwellwert angelegt werden, und ein zweiter Eingang des Komparators kann mit dem Stromerfassungswiderstand gekoppelt sein. An den zweiten Eingang wird somit eine an dem Stromerfassungswiderstand abfallende elektrische Spannung angelegt. Liegt die Amplitude der am Stromerfassungswiderstand abfallenden Spannung unterhalb des Schwellwerts, so gibt der Komparator eine logische "Eins", also eine vorbestimmte Gleichspannung aus, und das mit dem Ausgang des Komparators gekoppelte Steuerelement wird angesteuert. Überschreitet die am Stromerfassungswiderstand abfallende Spannung den Schwellwert, das heißt überschreitet die Stromstärke des über den Stromerfassungswiderstand fließenden Stromes einen vorbestimmten Wert, so gibt der Komparator eine logische "Null" aus. In diesem Fall wird der Steueranschluss des Steuerelements mit einem Bezugspotential gekoppelt, und das Steuerelement wird nicht angesteuert. Durch diese Vorgehensweise können solche Stromspitzen begrenzt werden, die für eine relativ kurze Zeit auftreten. Bei Auftreten von Stromspitzen für eine längere Zeitdauer werden die Steuerelemente bevorzugt durch eine Steuereinheit abgeschaltet.

Die Erfassung des über die Phasenstränge des Stators fließenden Stromes ermöglicht das Rückschließen auf ein Drehmoment bzw. eine Last des Antriebsmotors. Es kann vorgesehen sein, dass das Drehmoment bzw. die Last abhängig von der Stromstärke des erfassten Stromes und/oder abhängig von einer Phasendifferenz zwischen der Phase des erfassten Stromes und der Phase einer an die Phasenstränge angelegten Spannung ermittelt wird. Es gilt die Beziehung, dass je höher das Drehmoment ist, desto höher die Stromstärke des erfassten Stromes und desto größer die Phasendifferenz ist. Also steht die Information über das Drehmoment des Antriebsmotors für die Ansteuerung desselben zur Verfügung. Es kann abhängig von dem Drehmoment auf den Betriebszustand des Pumpenrades oder auch auf die im Bereich des Pumpenrades herrschenden Betriebszustände, zum Beispiel auf einen Verflusungszustand des zu fördernden Wassers oder auch auf die Menge des Wassers, rückgeschlossen werden. Die Ansteuerung des Antriebsmotors kann somit abhängig von dessen Drehmoment erfolgen, es kann nämlich eine jeweils optimale Drehzahl und/oder Drehrichtung abhängig von den Betriebszuständen im Bereich des Pumpenrades eingestellt werden.

Wird eine vorbestimmte Stromstärke des erfassten Stromes und/oder ein vorbestimmtes Drehmoment des Antriebsmotors überschritten, so kann vorgesehen sein, dass die Drehrichtung des Antriebsmotors geändert wird. Ein zu hohes Drehmoment bzw. eine zu hohe Stromstärke des Stromes bedeuten in der Regel, dass eine hohe Verunreinigung bzw. Verflusung des Pumpenrads vorliegt. Wird das Pumpenrad in einem solchen Fall in die andere Richtung gedreht, so befreit es sich von den Flusen, und es erübrigt sich die Wartung der Pumpeneinrichtung mit dem damit verbundenen Zeitaufwand und gegebenenfalls den Kosten.

Man kennt das Problem der Geräuschentwicklung durch eine Pumpe, wenn kein zu förderndes Wasser vorhanden ist. Ist die Menge des zu fördernden Wassers zu gering, so erzeugt eine Pumpe bekanntlich einen Lärm. Durch die Erfassung des Stromes bzw. durch Ermittlung des Drehmoments des Antriebsmotors kann auf die Menge des zu fördernden Wassers rückgeschlossen werden. Bei Unterschreiten einer vorbestimmten Stromstärke des Stromes und/oder eines vorbestimmten Drehmoments des Antriebsmotors, das heißt bei Unterschreiten einer vorbestimmten Menge des zu fördernden Wassers, kann der Antriebsmotor abgeschaltet werden. Auf eine solche Art und Weise können die vom Hausgerät erzeugten Geräusche insgesamt auf ein Minimum reduziert werden.

Wie bereits ausgeführt, kann der Antriebsmotor abhängig von dem Betriebszustand des Pumpenrades angesteuert werden. Die Informationen über die Betriebszustände im Bereich des Pumpenrades können mithilfe des erfassten Stromes gewonnen werden. Insbesondere wird die Drehzahl des Antriebsmotors abhängig von dem erfassten Strom geregelt, nämlich insbesondere abhängig von der Stromstärke dieses Stromes und/oder abhängig von der Phasendifferenz zwischen der Phase des Stromes und der Phase der induzierten Spannung. Hierdurch kann die Drehzahl und somit die Menge des zu fördernden Wassers pro Zeiteinheit abhängig von dem Drehmoment des Antriebsmotors geregelt werden. Eine solche Regelung kann insbesondere in einem Schleuderbetrieb einer Waschmaschine vorgenommen werden.

Ein erfindungsgemäßes Hausgerät umfasst eine erfindungsgemäße Pumpeneinrichtung oder eine bevorzugte Ausgestaltung derselben. Das Hausgerät kann eine Waschmaschine, ein Wäschetrockner, ein Waschtrockner oder eine Geschirrspülmaschine sein.

Bei einem erfindungsgemäßen Verfahren zum Betreiben eines Antriebsmotors wird ein Pumpenrad eines Hausgeräts durch den Antriebsmotor angetrieben. Der Stator weist wenigstens drei Phasenstränge auf. Die Drehzahl und/oder die Drehrichtung des Antriebsmotors wird/werden mithilfe einer Schaltungsanordnung gesteuert.

Die mit Bezug auf die erfindungsgemäße Schaltungsanordnung vorgestellten bevorzugten Ausführungsformen und insbesondere deren Vorteile gelten entsprechend für das erfindungsgemäße Hausgerät sowie für das erfindungsgemäße Verfahren.

Merkmale der Erfindung ergeben sich aus den Patentansprüchen, den Figuren der beigefügten Zeichnung und deren nachfolgender Beschreibung. Die vorstehend genannten Merkmale und Merkmalskombinationen sowie die nachfolgend genannten und/oder in der Zeichnung alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand einzelner bevorzugter Ausführungsbeispiele sowie unter Bezugnahme auf die Figuren der Zeichnung näher erläutert, wobei
- Fig. 1: in schematischer Darstellung einen Querschnitt durch einen Antriebsmotor für eine Pumpeneinrichtung eines Hausgeräts veranschaulicht;
- Fig. 2: in schematischer Darstellung die Pumpeneinrichtung mit dem Antriebsmotor und einer zu dessen Betreiben vorgesehenen Schaltungsanordnung veranschaulicht; und
- Fig. 3: zeitliche Verläufe von Strömen, die in einem Schrittmotorbetrieb an Wicklungen des Stators des Antriebsmotors abgegeben werden veranschaulicht.

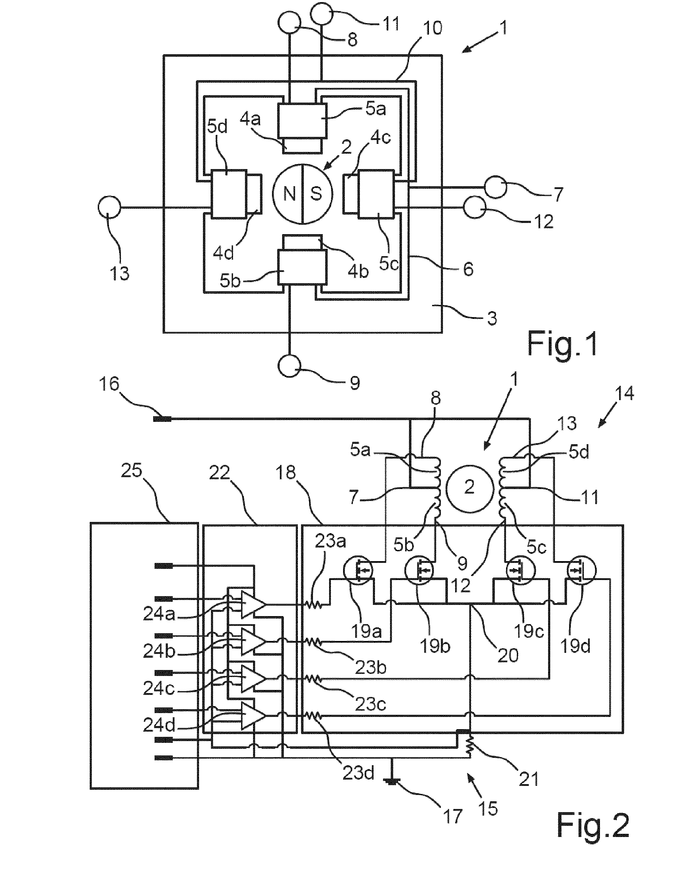

Fig. 1 ist eine schematische Darstellung eines Querschnitts eines Antriebsmotors 1 einer Pumpeneinrichtung, die in einem Hausgerät, zum Beispiel in einer Waschmaschine, eingebaut ist. Die Pumpeneinrichtung kann also eine Laugenpumpe der Waschmaschine sein. Die Pumpeneinrichtung dient zum Fördern von Wasser. Der Antriebsmotor 1 ist ein permanenterregter Synchronmotor, dessen Rotor 2 Permanentmagnete N, S aufweist. Der Rotor 2 weist insgesamt zwei Pole N, S auf.

Ein Stator 3 des Antriebsmotors 1 weist vier Zähne 4a bis 4d auf, die auf den Rotor 2 gerichtet sind bzw. zum Rotor 2 weisen. Um jeden Zahn 4a bis 4d ist eine Wicklung 5a bis 5d gewickelt. Die Wicklungen 5a bis 5d können separat voneinander bestromt werden, so dass insgesamt vier Phasenstränge des Antriebsmotors 1 gebildet sind.

Die erste Wicklung 5a ist über eine erste Leitung 6 mit der ihr gegenüberliegenden zweiten Wicklung 5b elektrisch verbunden. Diese erste Leitung 6 ist mit einem ersten Versorgungsanschluss 7 gekoppelt, an welchen eine elektrische Gleichspannung angelegt werden kann. Die erste Wicklung 5a ist mit einem ersten Anschluss 8 gekoppelt, der über ein Steuerelement, zum Beispiel über einen Transistor, mit einem Bezugspotential gekoppelt werden kann. Die zweite Wicklung 5b ist ebenfalls mit einem zweiten Anschluss 9 gekoppelt, der über ein Steuerelement mit einem Bezugspotential gekoppelt werden kann. Liegt an dem ersten Versorgungsanschluss 7 eine elektrische Spannung gegenüber dem Bezugspotential an, so können die erste und die zweite Wicklung 5a, 5b bestromt werden, indem sie mit dem Bezugspotential gekoppelt werden.

Ebenfalls ist die dritte Wicklung 5c über eine zweite Leitung 10 mit der ihr gegenüberliegenden vierten Wicklung 5d elektrisch gekoppelt. Die zweite Leitung 10 ist mit einem zweiten Versorgungsanschluss 11 verbunden, an welchen eine elektrische Gleichspannung angelegt werden kann. Die dritte Wicklung 5c ist ferner mit einem dritten Anschluss 12 verbunden, der über ein Steuerelement, zum Beispiel einen Transistor, mit einem Bezugspotential gekoppelt werden kann. Die vierte Wicklung 5d ist ebenfalls mit einem vierten Anschluss 13 verbunden und kann über ein Steuerelement mit einem Bezugspotential gekoppelt werden. Liegt an dem zweiten Versorgungsanschluss 11 eine elektrische Spannung an, so können die dritte und die vierte Wicklung 5c, 5d bestromt werden, indem sie mit dem Bezugspotential gekoppelt werden.

Fig. 2 zeigt eine Pumpeneinrichtung 14, die den in Fig. 1 dargestellten Antriebsmotor 1 und eine Schaltungsanordnung 15 umfasst. Man erkennt in Fig. 2 die schematisch dargestellten Wicklungen 5a bis 5d des Antriebsmotors 1 sowie die jeweiligen Anschlüsse 8, 9, 12, 13 und die Versorgungsanschlüsse 7, 11. Der erste und der zweite Versorgungsanschluss 7, 11 sind mit einem gemeinsamen Zwischenkreispol 16 verbunden, an welchem eine gleichgerichtete elektrische Spannung von etwa 310 V_{DC} anliegt, nämlich bezüglich eines Bezugspotentials 17. Diese Gleichspannung wird mithilfe einer in Fig. 2 nicht dargestellten Schaltung einschließlich eines Gleichrichters und eines Zwischenkreiskondensators bereitgestellt, nämlich aus einer Versorgungswechselspannung von einem Versorgungsnetz.

Die Anschlüsse 8, 9, 12, 13 der Wicklungen 5a bis 5d sind mit einem Wechselrichter 18 gekoppelt, der vier Steuerelemente 19a bis 19d, hier vier Bipolartransistoren mit isolierter Gate-Elektrode (IGBT, insulated-gate bipolar transistor) oder vier MOSFETs, aufweist. Der erste Anschluss 8 ist mit dem Drain- bzw. Kollektor-Anschluss des ersten Steuerelements 19a verbunden, der zweite Anschluss 9 ist mit dem Drain- bzw. Kollektor-Anschluss des zweiten Steuerelements 19b verbunden, der dritte Anschluss 12 ist mit dem Drain- bzw. Kollektor-Anschluss des dritten Steuerelements 19c verbunden, und der vierte Anschluss 13 ist mit dem Drain- bzw. Kollektor-Anschluss des vierten Steuerelements 19d verbunden. Die Source- bzw. Ermittler-Anschlüsse der Steuerelemente 19a bis 19d sind über einen gemeinsamen Pol 20 sowie über einen Stromerfassungswiderstand (Shunt) 21 mit dem Bezugspotential 17 gekoppelt. Die Gate-Anschlüsse der Steuerelemente 19a bis 19d sind mit einer Treiberschaltung 22 verbunden.

Die Treiberschaltung 22 umfasst vier Komparatoren 24a bis 24d. Der Gate-Anschluss des ersten Steuerelements 19a ist über einen ersten Ohmschen Widerstand 23a mit einem

Ausgang des ersten Komparators 24a verbunden, der Gate-Anschluss des zweiten Steuerelements 19b ist über einen zweiten Ohmschen Widerstand 23b mit einem Ausgang des zweiten Komparators 24b verbunden, der Gate-Anschluss des dritten Steuerelements 19c ist über einen dritten Ohmschen Widerstand 23c mit einem Ausgang des dritten Komparators 24c verbunden, und der Gate-Anschluss des vierten Steuerelements 19d ist über einen vierten Ohmschen Widerstand 23d mit einem Ausgang des vierten Komparators 24d verbunden. Die positiven Eingänge der Komparatoren 24a bis 24d sind mit einer Steuereinheit 25, insbesondere einem Mikroprozessor, gekoppelt. An den jeweiligen positiven Eingängen der Komparatoren 24a bis 24d werden elektrische Spannungen angelegt, deren Amplituden jeweils einem Schwellwert entsprechen. Die negativen Eingänge der Komparatoren 24a bis 24d sind mit dem Pol 20 und somit auch mit dem Stromerfassungswiderstand 21 verbunden. An den negativen Eingängen der Komparatoren 24a bis 24d liegt somit eine am Stromerfassungswiderstand 21 abfallende Spannung an. Die Komparatoren 24a bis 24d werden außerdem mit einer Gleichspannung von beispielsweise 15 V_{Dc} von der Steuereinheit 25 versorgt und sind darüber hinaus mit dem Bezugspotential 17 gekoppelt. Überschreitet die am Stromerfassungswiderstand 21 abfallende Spannung den an den positiven Eingang eines der Komparatoren 24a bis 24d angelegten Schwellwert, so gibt dieser Komparator 24a bis 24d eine logische "Null" aus. In diesem Fall wird der Gate-Anschluss des mit diesem Komparator 24a bis 24d gekoppelten Steuerelements 19a bis 19d mit dem Bezugspotential 17 gekoppelt, und das Steuerelement 19a bis 19d ist nicht leitend.

Der Pol 20 und der Stromerfassungswiderstand 21 sind ebenfalls mit einem Eingang der Steuereinheit 25 verbunden. Die Steuereinheit 25 kann also die am Stromerfassungswiderstand 21 abfallende Spannung erfassen und auswerten. Die Steuereinheit 25 kann abhängig von dieser Spannung auf den über den Stromerfassungswiderstand 21 fließenden Strom rückschließen. Die Steuereinheit 25 kann somit die über die Wicklungen 5a bis 5d des Antriebsmotors 1 fließenden Ströme erfassen und auswerten.

Nachfolgend werden die Funktionsweise und der Betrieb der Pumpeneinrichtung 14 in einer Waschmaschine näher erläutert. Der Antriebsmotor 1 treibt ein Pumpenrad an, welches Wasser fördert. Die Pumpeneinrichtung 14 ist beispielsweise eine Laugenpumpe. Die Steuereinheit 25 empfängt zunächst Steuerbefehle, nämlich beispielsweise von einer zentralen Steuereinrichtung der Waschmaschine. Diese Steuerbefehle können eine gewünschte Pumpenleistung beinhalten, mit welcher die Pumpeneinrichtung 14 das Wasser fördern soll, also die Menge des geförderten Wassers pro Zeiteinheit. Diese Steuerbefehle können auch die Drehrichtung des Pumpenrads beinhalten. Also sind die gewünschte Drehzahl und die Drehrichtung in der Steuereinheit 25 vorgegeben. Die Steuereinheit 25 steuert dann den Wechselrichter 18 und somit den Antriebsmotor 1 an. Bei Inbetriebnahme des Antriebsmotors 1 bewirkt die Steuereinheit 25 eine pulsweise Ansteuerung der Steuerelemente 19a bis 19d und somit pulsartige Verläufe der über die Wicklungen 5a bis 5d fließenden Ströme. Der Antriebsmotor 1 wird somit gemäß dem unipolaren Schrittmotorbetrieb angesteuert. Ein solcher Schrittmotorbetrieb ermöglicht das Anlaufen des Antriebsmotors 1 in die gewünschte Drehrichtung ohne viel Aufwand.

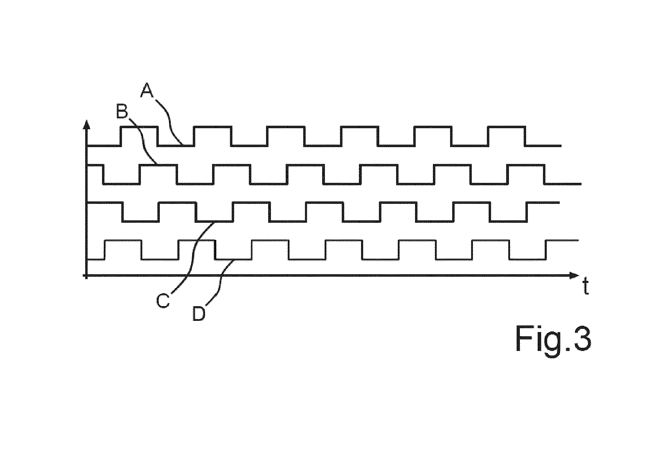

Fig. 3 zeigt beispielhafte Verläufe der Ströme in den Wicklungen 5a bis 5d in dem Schrittmotorbetrieb des Antriebsmotors 1. Auf der x-Achse ist die Zeit t aufgetragen. Die erste Kurve A zeigt den Stromverlauf in der ersten Wicklung 5a des Antriebsmotors 1, die zweite Kurve B den Stromverlauf in der zweiten Wicklung 5b, die dritte Kurve C den Stromverlauf in der dritten Wicklung 5c, und die vierte Kurve D den Stromverlauf in der vierten Wicklung 5d. Es geht aus Fig. 3 hervor, dass die Stromverläufe der Wicklungen 5a bis 5d jeweils um 90° phasenverschoben sind. Das heißt, dass der Strom in der zweiten Wicklung 5b eine Phasenverschiebung bezüglich des Stromes in der ersten Wicklung 5a von 90° aufweist. Entsprechend weist der Strom in der dritten Wicklung 5c eine Phasenverschiebung von 90° bezüglich des Stromes in der zweiten Wicklung 5b auf, und der Strom in der vierten Wicklung 5d weist eine Phasenverschiebung von 90° bezüglich des Stromes in der dritten Wicklung 5c auf. Eine solche Betriebsweise des Antriebsmotors 1 wird als unipolarer Schrittmotorbetrieb bezeichnet, da die Wicklungen 5a bis 5d mit Strom jeweils nur in einer Richtung bestromt werden.

In einem solchen Schrittmotorbetrieb wird der Antriebsmotor 1 bis zu einer vorbestimmten Drehzahl, beispielsweise bis etwa 150 Umdrehungen pro Minute, betrieben. Bei dieser Drehzahl erfolgt ein Übergang in einen Synchronbetrieb. In diesem Synchronbetrieb können nur zwei Wicklungen 5a bis 5d bestromt werden, nämlich paarweise die erste und die zweite Wicklung 5a, 5b oder die dritte und die vierte Wicklung 5c, 5d. Dies ermöglicht ein Abkühlen der nicht bestromten Wicklungen 5a bis 5d in dem Synchronbetrieb, so dass eine längere Betriebsdauer bei einer hohen Drehzahl des Antriebsmotors 1 erreicht werden kann.

Wie bereits ausgeführt, erfasst die Steuereinheit 25 den über den Stromerfassungswiderstand 21 fließenden Strom. Aus der Stromstärke dieses induzierten Stromes oder auch aus einer Phasendifferenz zwischen der Phase dieses Stromes und der Phase einer an die Wicklungen 5a bis 5d angelegten Spannung kann die Steuereinheit 25 das jeweils augenblickliche Drehmoment des Antriebsmotors 1 berechnen. Dieses Drehmoment ist dann ein Maß für die jeweils augenblickliche Last des Antriebsmotors 1. Die Ansteuerung des Antriebsmotors 1 erfolgt durch die Steuereinheit 25 abhängig von dem berechneten Drehmoment.

Unterschreitet das Drehmoment einen vorgegebenen Schwellwert, so ist dies ein Hinweis darauf, dass die Menge des zu fördernden Wassers einen bestimmten Wert unterschritten hat. In diesem Falle schaltet die Steuereinheit 25 den Antriebsmotor 1 ab. Durch eine solche Vorgehensweise wird vermieden, dass das Pumpenrad Geräusche erzeugt.

Ist das Pumpenrad mit Flusen verunreinigt, so erhöht sich das Drehmoment des Antriebsmotors 1. Überschreitet also das Drehmoment einen vorbestimmten weiteren Schwellwert, so ändert die Steuereinheit 25 die Drehrichtung des Antriebsmotors 1, und das Pumpenrad kann sich von den Flusen befreien. Es erfolgt zunächst ein Abbremsen des Antriebsmotors 1 und dann ein erneutes Beschleunigen desselben in die andere Richtung in dem Schrittmotorbetrieb.

Treten zu hohe Stromspitzen des über den Stromerfassungswiderstand 21 fließenden Stromes auf, so können diese mithilfe der Komparatoren 24a bis 24d kompensiert werden; dies gilt nur für solche Stromspitzen, die für eine relativ kurze Zeit auftreten. Treten Stromspitzen des Stromes für eine längere Zeitdauer auf, so kann die Steuereinheit 25 die Steuerelemente 19a bis 19d abschalten, so dass diese nicht mehr leitend sind. Bei länger andauernden Stromspitzen greift also die Steuereinheit 25 in die Ansteuerung der Steuerelemente 19a bis 19d ein. Hierdurch können hohe Temperaturen der Wicklungen 5a bis 5d vermieden werden, und es erübrigt sich der Einsatz zusätzlicher Schutzeinrichtungen, wie sie im Stand der Technik verwandt werden (zum Beispiel so genannte l²t-Schutzeinrichtungen).

Insgesamt wird also eine Pumpeneinrichtung 14 geschaffen, deren Funktionalität im Vergleich zum Stand der Technik erhöht ist. Die Drehzahl sowie die Drehrichtung des Pumpenrads können nämlich frei eingestellt werden, zum Beispiel in Abhängigkeit von dem Drehmoment des Antriebsmotors 1. Die Änderung der Drehzahl ermöglicht zum Beispiel die Einstellung der Pumpenleistung, das heißt der Menge des zu fördernden Wassers pro Zeiteinheit. Die Einstellung der Drehzahl verringert auch die Geräuschentwicklung der Pumpeneinrichtung 14 gegenüber dem Stand der Technik. Auch die Wartung der Pumpeneinrichtung 14 muss seltener als im Stand der Technik vorgenommen werden, das Pumpenrad kann sich nämlich selbst von Verunreinigungen bzw. Flusen befreien, dies durch Änderung der Drehrichtung. Eine solche Pumpeneinrichtung 14 ermöglicht außerdem eine völlig neue Ausgestaltung des Pumpenrads, dieses kann nämlich für beide Drehrichtungen ausgelegt werden und beispielsweise auch mit bewegbaren Flügeln ausgestattet werden.

### Bezugszeichenliste

- 1: Antriebsmotor
- 2: Rotor
- 3: Stator
- 4a, 4b, 4c, 4d: Zähne
- 5a, 5b, 5c, 5d: Wicklungen
- 6, 10: Leitungen
- 7, 11: Versorgungsanschlüsse
- 8, 9, 12, 13: Anschlüsse
- 14: Pumpeneinrichtung
- 15: Schaltungsanordnung
- 16: Zwischenkreispol
- 17: Bezugspotential
- 18: Wechselrichter
- 19a, 19b, 19c, 19d: Steuerelemente
- 20: Pol
- 21: Stromerfassungswiderstand
- 22: Treiberschaltung
- 23a, 23b, 23c, 23d: Ohmsche Widerstände
- 24a, 24b, 24c, 24d: Komparatoren
- 25: Steuereinheit
- N, S: Permanentmagnete bzw. Pole
- t: Zeit
- A, B, C, D: Stromverläufe

## Patentansprüche

1. Pumpeneinrichtung (14) für ein Hausgerät, mit einem Antriebsmotor (1) zum Antreiben eines Pumpenrades, wobei der Rotor (2) des Antriebsmotors (1) Permanentmagnete (N, S) aufweist, und mit einer Schaltungsanordnung (15) zum Betreiben des Antriebsmotors (1), wobei der Stator (3) des Antriebsmotors (1) zumindest drei Phasenstränge (5a bis 5d) und die Schaltungsanordnung (15) zu jedem Phasenstrang (5a bis 5d) ein elektrisches Steuerelement (19a bis 19d) zum Steuern eines Stromflusses durch den zugeordneten Phasenstrang (5a bis 5d) aufweisen **dadurch gekennzeichnet, dass** die Schaltungsanordnung (15) dazu ausgebildet ist, durch Ansteuern der Steuerelemente (19a bis 19d) die Drehzahl und/oder die Drehrichtung des Antriebsmotors (1) zu steuern.

2. Pumpeneinrichtung (14) nach Anspruch 1, **dadurch gekennzeichnet, dass** der Stator (3) eine gerade Anzahl von Phasensträngen (5a bis 5d), insbesondere vier Phasenstränge (5a bis 5d), aufweist.

3. Pumpeneinrichtung (14) nach einem der vorigen Ansprüche, **dadurch gekennzeichnet, dass** die Schaltungsanordnung (15) dazu ausgebildet ist, durch Erzeugen jeweils eines pulsartigen Verlaufs (A, B, C, D) des Stromes in den Phasensträngen (5a bis 5d) eine schrittweise Bewegung des Rotors (2) zu bewirken und hierdurch den Antriebsmotor (1) gemäß dem Schrittmotorbetrieb anzusteuern.

4. Pumpeneinrichtung (14) nach Anspruch 3, **dadurch gekennzeichnet, dass** die Schaltungsanordnung (15) dazu ausgebildet ist, den Antriebsmotor (1) bis zu einer vorbestimmbaren Drehzahl gemäß dem Schrittmotorbetrieb anzusteuern und bei Erreichen dieser Drehzahl in einen Synchronbetrieb zu überführen.

5. Pumpeneinrichtung (14) nach einem der Ansprüche 3 und 4, **dadurch gekennzeichnet, dass** die Schaltungsanordnung (15) dazu ausgebildet ist, wenigstens ein Steuerelement (19a bis 19d) in dem Synchronbetrieb auszuschalten und nur vorbestimmte Steuerelemente (19a bis 19d) anzusteuern.

6. Pumpeneinrichtung (14) nach einem der vorigen Ansprüche, **dadurch gekennzeichnet, dass** die Steuerelemente (19a bis 19d) mit einem gemeinsamen Stromerfassungswiderstand (21) gekoppelt sind und die Schaltungsanordnung (15) zum Erfassen eines über den Stromerfassungswiderstand (21) fließenden Stromes ausgebildet ist.

7. Pumpeneinrichtung (14) nach Anspruch 6, **dadurch gekennzeichnet, dass** die Schaltungsanordnung (15) dazu ausgebildet ist, abhängig von der Stromstärke des erfassten Stromes und/oder abhängig von einer Phasendifferenz zwischen der Phase des erfassten Stromes und der Phase einer induzierten Spannung auf ein Drehmoment des Antriebsmotors (1) zurück zu schließen.

8. Pumpeneinrichtung (14) nach einem der Ansprüche 6 und 7, **dadurch gekennzeichnet, dass** die Schaltungsanordnung (15) dazu ausgebildet ist, bei Überschreiten einer vorbestimmten Stromstärke des Stromes und/oder bei Überschreiten eines vorbestimmten Drehmoments des Antriebsmotors (1) die Drehrichtung des Antriebsmotors (1) zu ändern.

9. Pumpeneinrichtung (14) nach einem der Ansprüche 6 bis 8, **dadurch gekennzeichnet, dass** die Schaltungsanordnung (15) dazu ausgebildet ist, bei Unterschreiten einer vorbestimmten Stromstärke des Stromes und/oder bei Unterschreiten eines vorbestimmten Drehmoments des Antriebsmotors (1) den Antriebsmotor (1) abzuschalten.

10. Pumpeneinrichtung (14) nach einem der Ansprüche 6 bis 9, **dadurch gekennzeichnet, dass** die Schaltungsanordnung (15) dazu ausgebildet ist, die Drehzahl des Antriebsmotors (1) in Abhängigkeit von dem erfassten Strom zu regeln.

11. Hausgerät mit einer Pumpeneinrichtung (14) mit einem Antriebsmotor (1) zum Antreiben eines Pumpenrades, wobei der Rotor (2) des Antriebsmotors (1) Permanentmagnete (N, S) aufweist, und mit einer Schaltungsanordnung (15) zum Betreiben des Antriebsmotors (1), wobei der Stator (3) des Antriebsmotors (1) zumindest drei Phasenstränge (5a bis 5d) und die Schaltungsanordnung (15) zu jedem Phasenstrang (5a bis 5d) ein elektrisches Steuerelement (19a bis 19d) zum Steuern eines Stromflusses durch den zugeordneten Phasenstrang (5a bis 5d) aufweisen **dadurch gekennzeichnet, dass** die Schaltungsanordnung (15) dazu ausgebildet ist, durch Ansteuern der Steuerelemente (19a bis 19d) die Drehzahl und/oder die Drehrichtung des Antriebsmotors (1) zu steuern.

12. Verfahren zum Betreiben eines Antriebsmotors (1), durch welchen ein Pumpenrad eines Hausgeräts angetrieben wird und dessen Stator (3) wenigstens drei Phasenstränge (5a bis 5d) aufweist, **dadurch gekennzeichnet, dass** die Drehzahl und/oder die Drehrichtung des Antriebsmotors (1) mithilfe einer Schaltungsanordnung (15) gesteuert wird.

13. Verfahren nach Anspruch 12, **dadurch gekennzeichnet, dass** jeweils ein pulsartiger Verlauf des Stromes in den Phasensträngen (5a bis 5d) des Stators (3) mittels der Schaltungsanordnung (15) erzeugt wird und hierdurch eine schrittweise Bewegung des Rotors (2) des Antriebsmotors (1) erfolgt, wobei bevorzugt der Antriebsmotor (1) bis zu einer vorbestimmbaren Drehzahl gemäß dem Schrittmotorbetrieb angesteuert und bei Erreichen dieser Drehzahl in einen Synchronbetrieb überführt wird.

14. Verfahren nach einem der Ansprüche 12 und 13, **dadurch gekennzeichnet, dass** ein über die Phasenstränge (5a bis 5d) fließender Strom erfasst und abhängig von der Stromstärke des erfassten Stromes und/oder abhängig von einer Phasendifferenz zwischen der Phase des erfassten Stromes und der Phase einer induzierten Spannung auf ein Drehmoment des Antriebsmotors (1) rückgeschlossen wird.

15. Verfahren nach Anspruch 14, **dadurch gekennzeichnet, dass**
- dann, wenn ein vorbestimmtes Drehmoment des Antriebsmotors (1) und/oder eine vorbestimmte Stromstärke des Stromes überschritten wird/werden, die Drehrichtung des Antriebsmotors (1) geändert wird, und/oder
- dann, wenn ein vorbestimmtes Drehmoment des Antriebsmotors (1) und/oder eine vorbestimmte Stromstärke des Stromes unterschritten wird/werden, der Antriebsmotor (1) abgeschaltet wird, und/oder
- die Drehzahl des Antriebsmotors (1) in Abhängigkeit von dem Strom geregelt wird.
